# EUROPEAN PATENT APPLICATION

(11) **EP 0 736 701 A1**
(43) Date of publication of application: **09.10.1996**
(21) Application number: 95200832.4
(22) Date of filing: 03.04.1995
(51) Int. Cl.: F16H 37/08, F16H 37/02

(54) **A combination of an epicyclic disc variator and an epicyclic reduction gear**

(71) Applicant: CASAROTTO, G. & C. S.R.L., I-45021 Badia Polesine (IT)
(72) Inventor: Casarotto, Giorgio, I-45021 Badia Polesine (RO) (IT)
(74) Representative: Cantaluppi, Stefano

(57) **Abstract**

A combination of an epicyclic disc variator (5) and an epicyclic reduction gear (6, 7) in which a rolling track (15b) for the variator discs (18) and at least one ring gear (30, 38) of the reduction gear are formed in the same body (12) of the casing (8), thus achieving reduced dimensions, particularly in an axial direction.

## Description

The present invention relates to a combination of an epicyclic disc variator and an epicyclic reduction gear of the type including a casing and at least one speed variator mechanism housed in the casing, the mechanism comprising a plurality of discs engaged between a pair of juxtaposed tracks, a first track being fixed to the casing whereas a second track is movable in a regulable manner towards and away from the first track in order to vary the transmission ratio of the variator mechanism, the combination further comprising at least one epicyclic reduction gear mechanism with a plurality of planetary gears mounted on a planet carrier and meshing with a ring gear.

As is well known, disc speed variators are widespread on the market. The products of the German company LENZE which has marketed speed variators of this type for some years are mentioned by way of example. It is also known to combine a disc variator in cascade with a reduction gear. This combination is normally effected by the coupling together of two separate mechanisms each having its own structures for supporting the shafts and the gearing. Although the resulting combination is generally satisfactory from a purely kinematic point of view, it is quite bulky particularly as regards its axial dimensions.

The problem upon which the present invention is based is that of producing a combination of this type which nevertheless has an advantageously small and compact structure.

This problem is solved, according to the invention, by means of a combination of the type indicated at the beginning, characterized in that the first track and the ring gear are fixed together in the same body of the casing.

The characteristics and advantages of the invention will become clearer from the following detailed description of three preferred but not exclusive embodiments thereof, described by way of non-limiting example with reference to the appended drawings, in which:
Figure 1 is an axial section of a combination of an epicyclic disc variator and two epicyclic reduction gears in cascade, according to a first embodiment of the invention,
Figure 2 is an axial section of a further combination of a variator and a reduction gear according to a second embodiment of the invention,
Figure 3 is a corresponding axial section of a combination of a variator and a reduction gear according to a third embodiment of the invention.

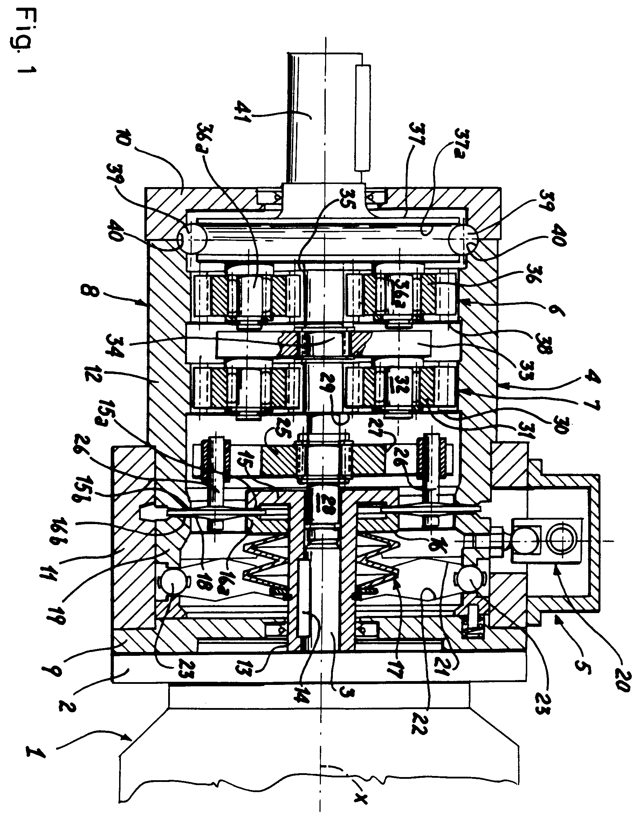

In Figure 1, an electric motor, generally indicated 1, carries a coupling flange 2 and a drive shaft 3 with an axis X. A combination of an epicyclic disc variator 5 and two epicyclic reduction gears, indicated 6 and 7 respectively, is indicated 4.

The combination 4 has a single casing 8 which in turn includes two axially opposed flanges 9, 10 joined by first and second tubular cylindrical bodies indicated 11 and 12, respectively.

The flange 9 is placed against the coupling flange 2 of the motor 1 and is fixed thereto in conventional manner. It is also fixed to the second cylindrical body 11, closing it axially.

The variator 5 comprises a tubular sleeve 13, which constitutes the drive input shaft of the combination 4, and is keyed to the shaft 3 of the motor 1 by means of a key 14.

Two flanges 15, 16, fixed for rotation with the sleeve, define respective axially opposed tracks 15a, 16a. The flange 15 is urged resiliently towards the flange 16 by a pack of Belleville washers, generally indicated 17, so that the tracks 15a, 16a are urged against the opposed tapered surfaces of a plurality of discs all indicated 18.

The same tapered surfaces are in rolling engagement with further tracks 15b, 16b which are movable relative to one another in a regulable manner along the axis X. The track 15b is formed on an axial end of the body 12 of the casing 8 and is fixed relative thereto. The track 16b is formed on an axial end of a ring 19 which can be moved by being rotated about the axis X by means of a conventional screw control 20 shown only partially in the drawings. Through the effect of two cam profiles 21, 22 and a ring of balls 23 interposed between them, a predetermined rotation of the ring 19 brings about, in known manner, an axial movement thereof towards or away from the track 15b in order to vary the transmission ratio of the variator 5.

The discs 18 are mounted on a planet carrier 25 by means of respective pins 26 which are guided in the planet carrier so as to be movable radially along guides 27. The epicyclic movement of the discs 18 is transmitted by means of the pins 26 and the planet carrier 25 to a shaft 28 one end of which is supported for rotation in the sleeve 13, a central gear 29 of the epicyclic reduction gear 7 being keyed to its other end. The central gear is meshed with a ring gear 30 through the intermediary of a plurality of planetary gears 31 which in turn are supported idly on respective pins 32 provided on a planet carrier 33 in known manner.

The planet carrier 33 is in turn keyed to a shaft 34 with which a further central gear 35 of the epicyclic reduction gear 6 is fixed for rotation. In addition to the central gear 35, this reduction gear 6 comprises a plurality of planetary gears 36 mounted on pins 36a of a planet carrier 37 and meshing with a ring gear 38. The planet carrier 37 is disc-shaped and carries on its radially outermost periphery a race 37a for a ring of balls 39. The balls are housed between the race 37a and a further race 40 of which half is formed in the flange 10 and the remaining half in the axial end of the body 12 of the casing 8. The races 37a, 40 thus define, with the balls 39, a bearing for supporting the planet carrier 37 and a drive output shaft 41 fixed thereto.

It will be noted that half of the race 40 and the two ring gears 30, 38 of the reduction gears 6 and 7, as well as the track 15b of the variator 5, are all formed by suitable machining of the body 12 of the casing 8. This solution achieves an appreciable saving in construction and, moreover, the important advantage of particularly limited axial dimensions.

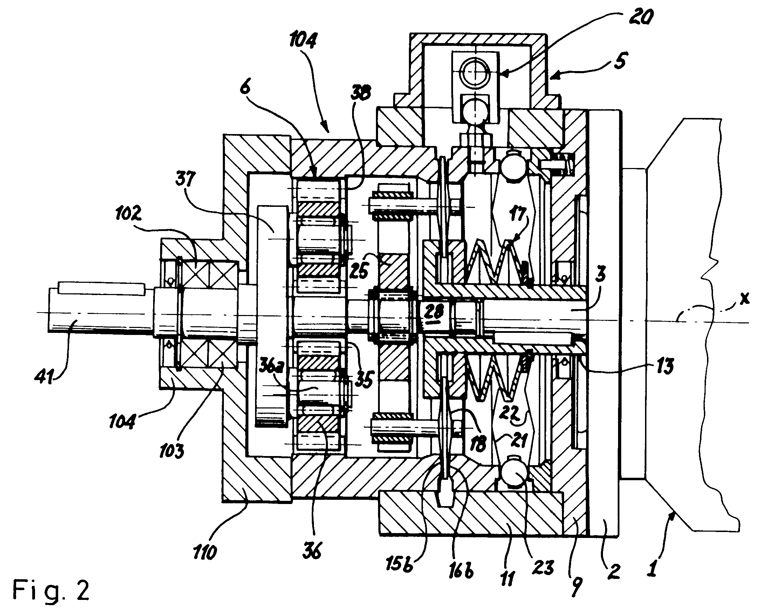

Figure 2 shows a second embodiment of the present invention; details similar to those of the previous embodiment are indicated by the same reference numerals.

The combination of this second embodiment, generally indicated 104, differs from the previous embodiment in that only one epicyclic reduction gear 6 is fitted in cascade with the variator 5 and in that the output shaft has a conventional support formed by a pair of bearings 102, 103 housed in a sleeve formation 104 of the flange 110.

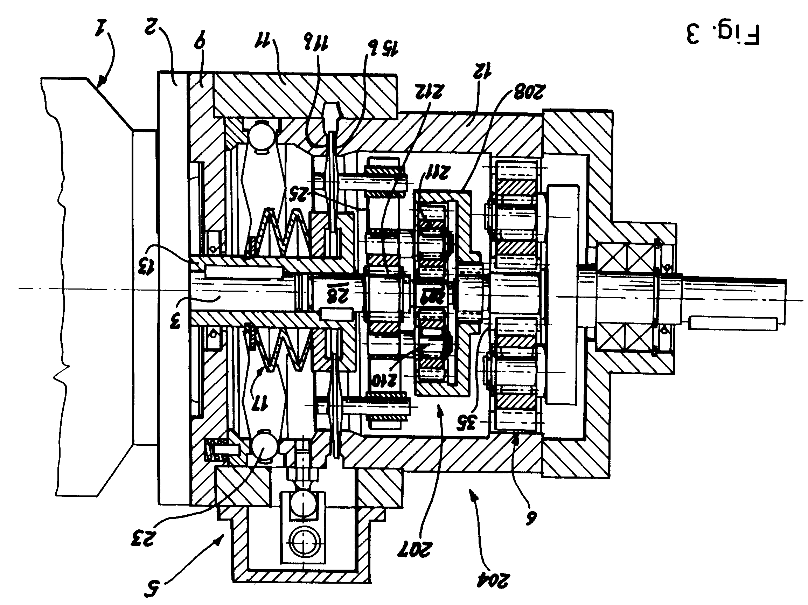

In the embodiment of Figure 3, the epicyclic variator and reduction gear combination is generally indicated 204; details similar to those of the previous embodiment are again indicated by the same reference numerals in this embodiment. The combination 204 is substantially similar to the previous embodiment, differing therefrom essentially in that an epicyclic differential 207 is interposed between the variator 5 and the reduction gear 6, its ring gear 208 being fixed for rotation with the central gear 35 of the reduction gear 6 and its central gear 209 being fixed for rotation with the shaft 28 of the epicyclic disc variator 5. In this embodiment, the pins 210 which carry the idle planetary gears 211 of the differential 207 are mounted on the same planet carrier 25 as the variator 5 and this planet carrier is mounted idly on the shaft 28 with the interposition of a bearing 212.

It should be noted that, in all three embodiments described, the track 15b of the variator 5, that is, the track which is disposed on the same side of the discs 18 as the epicyclic reduction gear, constitutes an element which is fixed relative to the casing 8. To achieve this, the arrangement of the movable track 16b and the face cam mechanism 21-23 for moving it is the reverse of that conventionally used in disc speed variators.

The measures described above enable a particularly compact and efficient combination of a disc speed variator and an epicyclic reduction gear to be produced.

## Claims

1. A combination of an epicyclic disc variator and an epicyclic reduction gear including a casing (8) and at least one speed variator mechanism (5) housed in the casing (8), the mechanism comprising a plurality of discs (18) engaged between a pair of juxtaposed tracks (15b, 16b), a first track (15b) being fixed to the casing, whereas a second track (16b) is movable in a regulable manner towards and away from the first track in order to vary the transmission ratio of the variator mechanism, the combination further comprising at least one epicyclic reduction gear mechanism (6, 7) with a plurality of planetary gears (31, 36) mounted on a planet carrier (33, 37) and meshing with a ring gear (30, 38), characterized in that the first track (15b) and the ring gear (30, 38) are fixed together in the same body (12) of the casing (8).

2. A combination according to Claim 1, in which the body (12) of the casing has integrally a further track (40) forming a race for a bearing for supporting the planet carrier (37) of the epicyclic reduction gear (6).

3. A combination according to Claim 1 or Claim 2, in which, in order to move the second track (16b) towards and away from the first (15b) there is a pair of face cams (21, 22) which are movable angularly relative to one another and of which one acts on the second track (16b), the cams being positioned on the opposite side of the discs (18) to the epicyclic reduction mechanism (6).
